# FASCICULE DE BREVET EUROPEEN

(11) **EP 3 649 326 B1**
(45) Date de publication et mention de la délivrance du brevet: **28.07.2021**
(21) Numéro de dépôt: 18796703.9
(22) Date de dépôt: 19.09.2018
(51) Int. Cl.: F01D 25/18, F16C 33/10, F16C 33/66

(54) **DISPOSITIF DE LUBRIFICATION ET DE REFROIDISSEMENT D'UN ROULEMENT POUR TURBOMACHINE**
VORRICHTUNG ZUM SCHMIEREN UND KÜHLEN EINES LAGERS EINER TURBO-MASCHINE
DEVICE FOR LUBRICATING AND COOLING A BEARING FOR TURBOMACHINE

(30) Priorité: 22.09.2017 FR 1758792
(43) Date de publication de la demande: 13.05.2020
(73) Titulaire: Safran Transmission Systems, 92700 Colombes (FR)
(72) Inventeur: BAUDUIN, Lionel, 77550 Moissy-Cramayel (FR); EZ-ZAHRAOUY, Othmane, 77550 Moissy-Cramayel (FR)
(74) Mandataire: Brevalex
(86) Numéro de dépôt international: PCT/FR2018/052284
(87) Numéro de publication internationale: WO 2019/058051

(56) Documents cités:
- DE-A1-102009 051 307
- FR-A1- 2 949 246
- GB-A- 582 082
- JP-A- 2010 156 376
- JP-A- 2011 169 356
- JP-A- 2014 047 812

## Description

### DOMAINE TECHNIQUE

L'invention se rapporte aux roulements d'arbres tournants de turbomachine d'aéronef. Plus précisément, l'invention concerne la lubrification et le refroidissement d'un roulement de turbomachine.

### ÉTAT DE LA TECHNIQUE ANTÉRIEURE

Les arbres tournants de turbomachine sont supportés et guidés en rotation par des roulements.

La bague extérieure d'un roulement de structure connue est fixée à un support qui fait partie du stator de la turbomachine. Le roulement est alimenté de manière continue en huile, pour le lubrifier et pour limiter son usure par frottements.

Le débit d'huile utilisé pour refroidir le roulement est très supérieur à celui qui est utilisé pour lubrifier le roulement. L'importance du débit d'huile global approvisionnant le roulement génère des pertes énergétiques importantes et diminue le rendement du roulement. Un exemple de dispositif de l'état de la technique antérieure est montré dans JP-2014/047812A.

### EXPOSÉ DE L'INVENTION

L'invention vise à résoudre au moins partiellement les problèmes rencontrés dans les solutions de l'art antérieur.

A cet égard, l'invention a pour objet un dispositif de lubrification et de refroidissement pour un roulement de turbomachine. Le dispositif de lubrification est au moins partiellement annulaire autour d'un axe du dispositif de lubrification et de refroidissement.

Selon l'invention, le dispositif comprend un premier conduit et un deuxième conduit qui est raccordé fluidiquement au premier conduit.

Le premier conduit est configuré pour être en contact thermique avec une bague extérieure du roulement en entourant au moins partiellement la bague extérieure. Le premier conduit est configuré pour faire circuler du lubrifiant pour refroidir la bague extérieure, vers une sortie d'évacuation du lubrifiant configurée pour évacuer du lubrifiant en direction opposée du roulement.

Le deuxième conduit est incliné par rapport au premier conduit. Le deuxième conduit est configuré pour éjecter du lubrifiant à travers une sortie de lubrification vers le roulement pour lubrifier le roulement.

Grâce au dispositif de lubrification et de refroidissement selon l'invention, le roulement est lubrifié et refroidi suffisamment, tout en augmentant le rendement du roulement.

L'invention peut comporter de manière facultative une ou plusieurs des caractéristiques suivantes combinées entre elles ou non.

De préférence, le deuxième conduit est dépourvu de contact thermique avec le roulement. Le deuxième conduit est très préférablement situé à distance de la bague extérieure.

Avantageusement, le dispositif comprend une entrée commune de lubrifiant pour alimenter le premier conduit et le deuxième conduit en lubrifiant.

Selon une particularité de réalisation, le premier conduit est situé axialement entre la sortie de lubrification et l'entrée commune de lubrifiant ou bien entre la sortie de lubrification et la sortie d'évacuation.

Selon une forme de réalisation avantageuse, le dispositif comprend une entrée de lubrifiant qui est située à proximité d'une première extrémité transversale du premier conduit. Le premier conduit comprend la sortie d'évacuation qui est située à une deuxième extrémité transversale du premier conduit qui est opposée à la première extrémité.

Selon une autre particularité de réalisation, la sortie de lubrification est orientée de manière à projeter du lubrifiant sur un flanc d'un élément roulant, de préférence sensiblement axialement.

De préférence, la sortie d'évacuation est orientée sensiblement axialement ou sensiblement radialement.

Avantageusement, le dispositif de lubrification comprend une pluralité d'entrées de lubrifiant, une pluralité de sorties d'évacuation et/ou une pluralité de sorties de lubrification, qui sont espacées autour de l'axe du dispositif de lubrification et de refroidissement.

De préférence, les entrées de lubrifiant, les sorties d'évacuation et/ou les sorties de lubrification sont réparties symétriquement autour de l'axe du dispositif de lubrification et de refroidissement.

Selon une forme de réalisation avantageuse, le premier conduit est orienté sensiblement axialement, le deuxième conduit étant orienté sensiblement radialement vers l'intérieur, par rapport à l'axe du dispositif de lubrification et de refroidissement.

Selon une autre particularité de réalisation, le dispositif de lubrification et de refroidissement est annulaire, le premier conduit étant configuré pour être au contact thermique de la bague extérieure au moins sur la majorité de la longueur circonférentielle de la bague extérieure.

De préférence, le deuxième conduit forme un rebord circonférentiel du dispositif de lubrification et de refroidissement.

Avantageusement, le premier conduit comprend une paroi qui comporte au moins un élément de refroidissement faisant saillie à l'intérieur du premier conduit. L'élément de refroidissement est configuré pour accroître les échanges thermiques entre le lubrifiant dans le premier conduit et la bague extérieure.

Avantageusement, la paroi du premier conduit et/ou une paroi du deuxième conduit comprennent au moins un renfort configuré pour augmenter la résistance mécanique du dispositif de lubrification et de refroidissement. Le renfort est également configuré pour accroître les échanges thermiques entre le lubrifiant dans le conduit et la bague extérieure.

L'invention porte également sur un assemblage pour turbomachine comprenant un support fixe de roulement, le roulement qui comprend une bague extérieure, et un dispositif de lubrification et de refroidissement tel que défini ci-dessus.

Le dispositif de lubrification et de refroidissement entoure au moins partiellement la bague extérieure et il est situé radialement entre le roulement et le support.

De préférence, le dispositif de lubrification et de refroidissement est assemblé de manière rigidement solidaire au support par la bague extérieure.

De préférence, le support comprend une surface radialement extérieure et une surface radialement intérieure opposée à la surface radialement intérieure, le support étant configuré pour alimenter en lubrifiant le dispositif par un conduit qui s'étend à travers le support depuis la surface radialement extérieure jusqu'à la surface radialement intérieure.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une vue schématique en coupe longitudinale d'une turbomachine selon l'invention ;
- la figure 2 est une vue schématique en demi-coupe longitudinale d'un assemblage de la turbomachine de la figure 1, selon un premier mode de réalisation préféré de l'invention ;
- la figure 3 est une vue schématique partielle en demi-coupe longitudinale d'un dispositif de lubrification et de refroidissement selon le premier mode de réalisation de l'invention ;
- la figure 4 est une vue schématique partielle en demi-coupe longitudinale d'un dispositif de lubrification et de refroidissement selon une première variante de réalisation du premier mode de réalisation de l'invention ;
- la figure 5 est une vue schématique partielle en demi-coupe longitudinale d'un dispositif de lubrification et de refroidissement selon une deuxième variante de réalisation du premier mode de réalisation de l'invention ;
- la figure 6 est une vue schématique en demi-coupe longitudinale d'un assemblage de la turbomachine de la figure 1, selon un deuxième mode de réalisation préféré de l'invention ;
- la figure 7 est une vue schématique partielle en demi-coupe longitudinale d'un dispositif de lubrification et de refroidissement selon le deuxième mode de réalisation de l'invention.

### EXPOSÉ DÉTAILLÉ DE MODES DE RÉALISATION PARTICULIERS

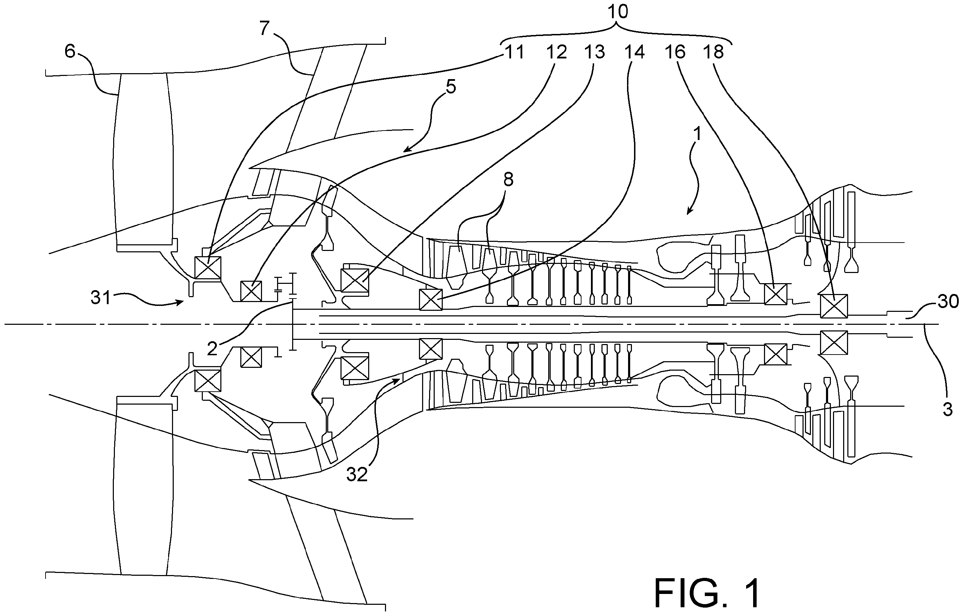

La figure 1 représente une turbomachine 1 d'aéronef selon un mode de réalisation préféré de l'invention. La turbomachine 1 est un turboréacteur à double flux. Elle comprend un arbre tournant 30 qui est mobile autour de l'axe principal longitudinal 3 de la turbomachine 1.

L'arbre 30 comprend notamment une partie avant 31 et une partie arrière 32 coaxiales. Les parties avant 31 et arrière 32 sont réunies par un réducteur 2 représenté de manière très schématique. Elles portent des aubes 6 de soufflante, des aubes de redressement 8 et des aubes de compresseur 8.

Les aubes 6 de soufflante et les aubes de compresseur 8 peuvent être entrainées à des vitesses de rotation différentes par l'entremise du réducteur 2. L'arbre avant 31 est généralement soutenu d'avant en arrière par un roulement à billes 11 et par un roulement à rouleaux 12 placé dans la zone du réducteur 2. La partie arrière 32 de l'arbre 30, beaucoup plus longue, est dans ce cas soutenue d'avant en arrière d'abord par une paire de roulements à billes 13 et 14 puis par une paire de roulements à rouleaux 16 et 18. La bague extérieure de chacun de ces six roulements est généralement fixée fermement à un carter du stator 5.

Habituellement, le rendement de la ligne d'arbres 31, 32 est entre 0,96 et 0,99, avec des pertes essentiellement produites dans le réducteur 2. Malgré cette valeur élevée du rendement, il est important de refroidir l'arbre tournant 30 pour évacuer la puissance calorifique qui y est dissipée.

Chacun des six roulements 11, 13, 14, 12, 16, 18 peut soutenir l'arbre 30. Il peut également être monté sur un arbre tournant de turbine basse pression (non représenté) ou éventuellement sur un arbre de turbomachine configuré pour tourner à des vitesses de rotation élevées, tel qu'un arbre de turbine haute pression (non représenté).

L'assemblage 4 pour turbomachine comprend un support fixe 50, un roulement 10, et un dispositif de lubrification et de refroidissement 40. Le lubrifiant utilisé est typiquement de l'huile.

L'assemblage 4 est annulaire autour d'un axe de révolution X-X du dispositif de lubrification et de refroidissement. L'axe X-X du dispositif de lubrification et de refroidissement est sensiblement confondu avec l'axe longitudinal 3 de la turbomachine.

Dans la suite de l'exposé, les directions avant et arrière sont définies par rapport au sens d'écoulement des gaz dans la turbomachine, dans le sens de la soufflante vers la turbine basse pression.

Les directions amont et aval sont définies en référence à la direction d'écoulement du lubrifiant. Le lubrifiant s'écoule de l'amont vers l'aval dans le dispositif de lubrification et de refroidissement 40.

Sauf précision contraire, les adjectifs « axial » et « radial » sont définis par rapport à l'axe de révolution X-X du dispositif de lubrification et de refroidissement 40. Une direction axiale est une direction sensiblement parallèle à l'axe X-X du dispositif de lubrification et de refroidissement 40. Une direction radiale est une direction sensiblement orthogonale à l'axe X-X du dispositif de lubrification et de refroidissement 40 et sécante avec l'axe X-X du dispositif de lubrification et de refroidissement. Une direction circonférentielle est une direction autour de l'axe X-X du dispositif de lubrification et de refroidissement.

Le support fixe 50 fait partie du stator 5 de la turbomachine. Il comprend une portion de carter 52 et un conduit d'alimentation 51 en lubrifiant. Il sert de support pour le roulement 10 et pour le dispositif de lubrification et de refroidissement 40.

La portion de carter 52 comprend une surface radialement extérieure Si, une surface radialement intérieure S₂ et une surface avant S₃. La surface radialement intérieure S₂ est opposée à la surface radialement intérieure S₁.

Le conduit d'entrée 51 s'étend depuis la surface radialement extérieure S₁ jusqu'à la surface radialement intérieure S₂. Il sert à acheminer du lubrifiant à travers le segment de carter 52 vers le dispositif de lubrification et de refroidissement 40.

Le conduit d'entrée 51 comprend une cavité d'alimentation 53 qui est située à proximité de la surface radialement intérieure S₂ et qui sert de réserve de lubrifiant pour le dispositif de lubrification et de refroidissement 40.

Le roulement 10 comprend une bague extérieure 20, une bague intérieure 26, une cage de roulement 28 et des éléments roulants 29. Le roulement 10 est notamment l'un des roulements 11, 12, 13, 14, 16, 18 qui est représenté à la figure 1.

La bague extérieure 20 comprend un corps 22 et une attache 24 qui est rigidement solidaire du corps 22. La bague extérieure 20 est notamment monobloc.

Le corps 22 forme un chemin de roulement pour les éléments roulants 29. L'attache 24 sert à solidariser rigidement le roulement 10 au support 50. L'attache 24 attache le corps 22 et le dispositif de lubrification et de refroidissement 40 à la surface avant S₃ du support 50.

La bague intérieure 26 est située radialement vers l'intérieur par rapport à la bague extérieure 20. Elle est rigidement solidaire de l'arbre 30 de turbomachine.

La cage de roulement 28 et les éléments roulants 29 sont situés radialement entre la bague intérieure 26 et la bague extérieure 20. La cage de roulement 28 est configurée pour guider le déplacement des éléments roulants 29 dans le chemin de roulement relativement au support 50.

Les éléments roulants 29 peuvent être de différentes natures, typiquement des billes, des rouleaux ou des aiguilles. Ils sont répartis autour de l'axe X-X du dispositif de lubrification et de refroidissement 40.

Le dispositif de lubrification et de refroidissement 40 est annulaire autour de l'axe X-X du dispositif. Le dispositif de lubrification et de refroidissement 40 entoure partiellement la bague extérieure 20. Il est situé radialement entre le roulement 10 et le support 50.

Il prend la forme d'un anneau comprenant un premier conduit 60 qui forme le corps de l'anneau, et un deuxième conduit 80 qui forme un rebord circonférentiel du dispositif 40.

Il comprend aussi une pluralité d'entrées 41 de lubrifiant, une pluralité de sorties d'évacuation 45 et une pluralité de sorties de lubrification 43. Le dispositif 4 comprend notamment autant d'entrée de lubrifiant 41 que de sorties de lubrification 43 et autant de sorties de lubrification 43 que de sorties d'évacuation 45.

Le premier conduit 60 comprend une paroi tubulaire 62 qui est en contact mécanique et thermique de la bague extérieure 20. La paroi tubulaire 62 entoure la bague extérieure 20 sur sensiblement toute la longueur circonférentielle de la bague extérieure 20.

Le premier conduit 60 est orienté transversalement axialement selon une direction transversale Y₁-Y₁. Il s'étend axialement entre une première extrémité transversale 61a et une deuxième extrémité transversale 61b. La première extrémité transversale 61a forme l'extrémité avant du premier conduit 60. La deuxième extrémité transversale 61b forme l'extrémité arrière du premier conduit 60.

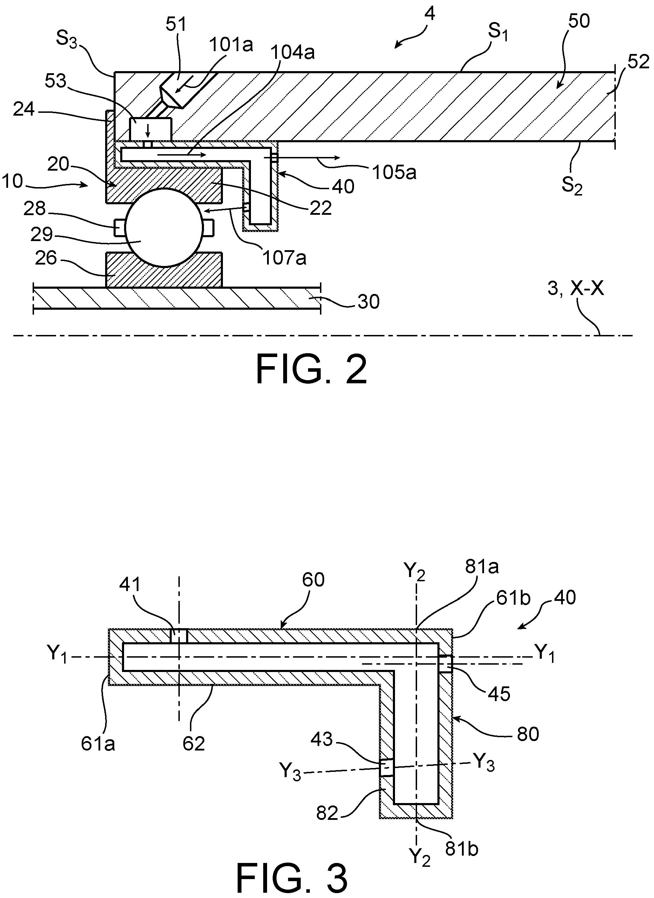

En référence aux figures 2 et 3, la paroi tubulaire 62 est traversée par les entrées 41 de lubrifiant qui sont situées à proximité de la première extrémité transversale 61a. La paroi tubulaire 62 est également traversée par sorties d'évacuation 45 qui sont situées au niveau de la deuxième extrémité transversale 61b. En d'autres termes, le premier conduit 60 s'étend transversalement entre les entrées 41 de lubrifiant et les sorties de lubrification 43.

Le premier conduit 60 est configuré pour faire circuler du lubrifiant depuis l'entrée 41 de lubrifiant vers la sortie d'évacuation 45, sans que ce lubrifiant n'alimente le roulement 10. Le premier conduit 60 sert à faire circuler du lubrifiant pour refroidir la bague extérieure 20.

Le deuxième conduit 80 est raccordé fluidiquement au premier conduit 60, en étant incliné par rapport au premier conduit 60.

Le deuxième conduit 80 comprend une paroi tubulaire 82 qui forme un coude avec la paroi tubulaire 62 du premier conduit, en étant située axialement à proximité de la deuxième extrémité 61b du premier conduit.

La paroi tubulaire 82 du deuxième conduit 80 est située axialement à distance du roulement 10. La paroi tubulaire 82 est en regard de la bague extérieure 20 et de la cage de roulement 28 sur sensiblement toute la longueur circonférentielle du roulement 10. La paroi tubulaire 82 est traversée par les sorties de lubrification 43 qui sont orientées vers le roulement 10.

Le deuxième conduit 80 est orienté transversalement radialement vers l'intérieur selon une direction transversale Y₂-Y₂. Le deuxième conduit 80 s'étend radialement entre une première extrémité transversale 81a et une deuxième extrémité transversale 81b. La première extrémité transversale 81a forme l'extrémité supérieure du deuxième conduit 80. La deuxième extrémité transversale 81b forme l'extrémité inférieure du premier conduit 80.

Le deuxième conduit 80 est configuré pour éjecter du lubrifiant ayant circulé dans le premier conduit 60 vers le roulement 10, pour lubrifier le roulement 10.

En référence aux figures 2 et 3, les entrées 41 de lubrifiant sont espacées les unes des autres symétriquement autour de l'axe X-X du dispositif, en étant situées à proximité de l'extrémité transversale avant 61a. Les entrées 41 de lubrifiant sont chacune en regard d'une sortie de la cavité d'alimentation 53 qui les alimente en lubrifiant. Elles sont orientées sensiblement radialement.

Les entrées 41 sont des entrées communes au premier conduit 60 et au deuxième conduit 80, qu'elles alimentent en lubrifiant.

Les sorties d'évacuation 45 sont espacées les unes des autres symétriquement autour de l'axe X-X du dispositif, en étant situées au niveau de l'extrémité distale 61b du premier conduit. Elles traversent l'arrière de la paroi 82 du deuxième conduit.

Elles sont décalées radialement vers l'intérieur par rapport aux entrées 41 de lubrifiant.

Les sorties d'évacuation 45 sont orientées chacune selon une direction d'évacuation Y₅-Y₅ qui est légèrement inclinée par rapport à l'axe X-X du dispositif de lubrification et de refroidissement 4, pour que le lubrifiant soit projeté axialement à l'opposé des éléments roulants 29. Les sorties d'évacuation 45 sont configurées pour évacuer du lubrifiant ayant permis de refroidir le roulement 10 et qui ne sert pas à lubrifier le roulement 10.

Toujours en référence aux figures 2 et 3, les sorties de lubrification 43 sont espacées les unes des autres symétriquement autour de l'axe X-X du dispositif. Elles traversent l'avant de la paroi 82 du deuxième conduit, vers le roulement 10.

Les sorties de lubrification 43 sont situées axialement entre les entrées 41 et les sorties d'évacuation 45. Elles sont décalées radialement vers l'intérieur par rapport aux entrées 41 et aux sorties d'évacuation 45.

Les sorties de lubrification 43 sont orientées chacune selon une direction de lubrification Y₃-Y₃ qui est légèrement inclinée par rapport à l'axe X-X du dispositif de lubrification et de refroidissement 4, pour que le lubrifiant soit projeté sur les flancs des éléments roulants 29. Les sorties de lubrification 43 sont configurées pour projeter du lubrifiant depuis le deuxième conduit 80 vers le roulement 10 pour lubrifier le roulement 10.

Le fonctionnement du dispositif de lubrification et de refroidissement 40 selon le premier mode de réalisation est décrit ci-dessous.

Un flux d'entrée 101a s'écoule dans le conduit d'entrée 51 en direction de l'entrée commune 41 de lubrifiant. Le flux de lubrifiant traversant l'entrée commune 41 s'écoule le long de la direction transversale Y₁-Y₁ du premier conduit en direction de l'extrémité arrière 61b, en formant un flux de refroidissement 104a. Une majorité du lubrifiant est ensuite éjectée à travers la sortie d'évacuation 45 selon un flux d'évacuation 105a. Le reste du lubrifiant circule dans le deuxième conduit 80 en direction de la sortie de lubrification 43 où il est éjecté vers le roulement 10 selon un flux de lubrification 107a.

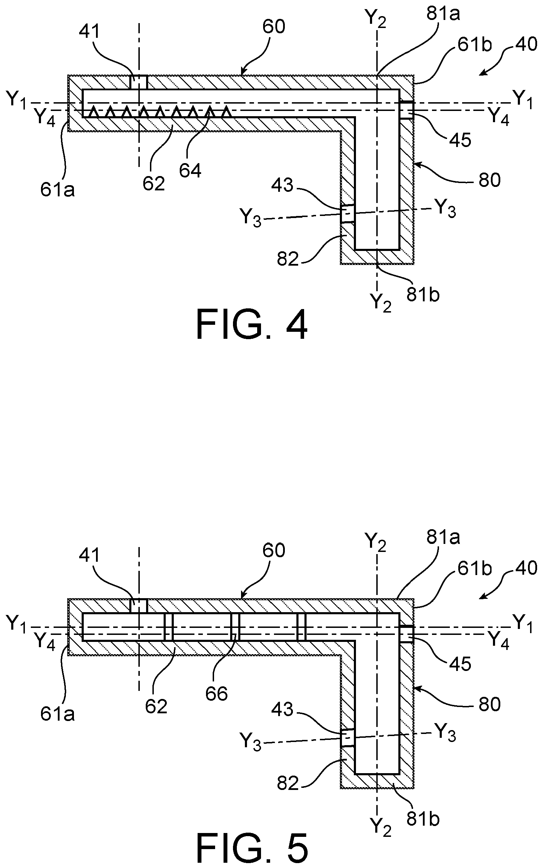

En référence à la figure 4, la première variante de réalisation se distingue du premier mode de réalisation en ce que la paroi tubulaire 62 du premier conduit 60 comprend des éléments de refroidissement 64 qui font saillie à l'intérieur du premier conduit 60 vers l'axe transversal Y₁-Y₁ du premier conduit. Les éléments de refroidissement 64 sont espacés les uns des autres le long de la direction circonférentielle du premier conduit 60. Ils sont espacés axialement les uns des autres entre la première extrémité 61a et la deuxième extrémité 61b du premier conduit.

Ces éléments de refroidissement 64 prennent notamment la forme d'ailettes de refroidissement. Ils sont configurés pour accroître les échanges thermiques entre le lubrifiant dans le premier conduit 60 et la bague extérieure 20.

En référence à la figure 5, la deuxième variante de réalisation se distingue du premier mode de réalisation en ce que la paroi tubulaire 62 du premier conduit 60 comprend des renforts 66 qui font saillie à l'intérieur du premier conduit 60 vers l'axe transversal Y₁-Y₁ du premier conduit. Les renforts 66 sont espacés les uns des autres le long de la direction circonférentielle du premier conduit 60. Ils sont espacés axialement les uns des autres axialement entre la première extrémité 61a et la deuxième extrémité 61b du premier conduit.

Ces renforts 66 prennent notamment la forme pontets qui s'étendent sur le long de diamètres du premier conduit 60. Ils sont configurés pour augmenter la résistance mécanique du dispositif de lubrification et de refroidissement 40.

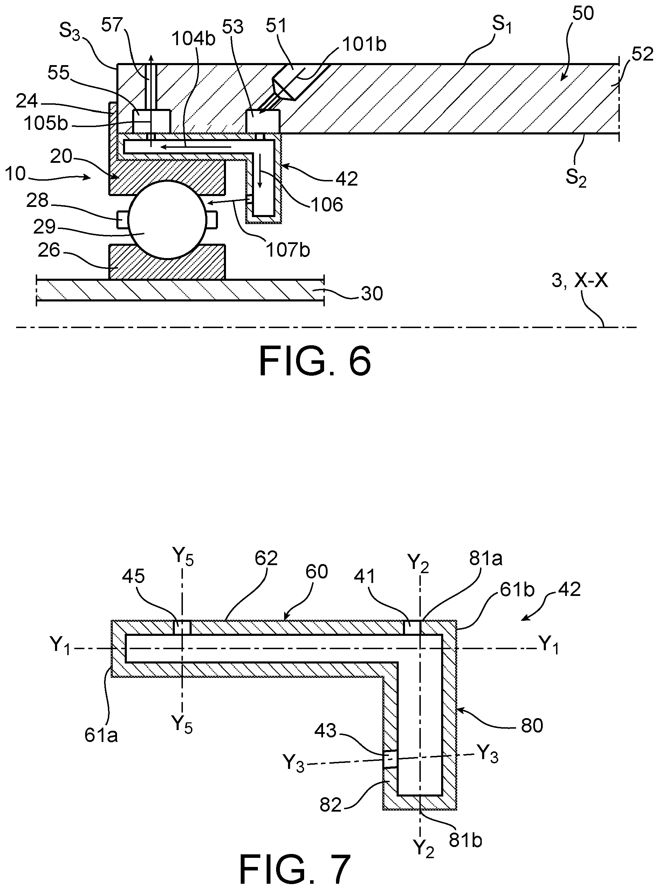

Le deuxième mode de réalisation est représenté en référence aux figures 5 et 6. L'assemblage 4 selon le deuxième mode de réalisation se distingue de celui du premier mode de réalisation par la structure du support 50 et par celle du dispositif de lubrification et de refroidissement 42.

En référence à la figure 6, le support 50 comprend le conduit d'alimentation 51 et un conduit de sortie 57. Le conduit d'alimentation 51 est de forme similaire à celui du premier mode de réalisation, en étant décalé vers l'arrière par rapport à celui du premier mode de réalisation pour déboucher dans les entrées communes 41.

Le conduit de sortie 57 s'étend depuis la surface radialement interne S₂ jusqu'à la surface radialement externe S₁. Il sert à évacuer le lubrifiant utilisé pour refroidir la bague extérieure 20 hors de l'assemblage 4.

Le conduit de sortie 57 comprend une cavité de sortie 55 est située à proximité de la surface radialement intérieure S₂ et qui forme une réserve de lubrifiant pour le dispositif de lubrification et de refroidissement 42.

En référence principalement à la figure 6, le dispositif de lubrification et de refroidissement 42 selon le deuxième mode de réalisation se différencie de celui du premier mode de réalisation par la position de l'entrée commune 41 et par la position de la sortie d'évacuation 45. Le premier conduit 60 est situé axialement entre la sortie de lubrification 43 et la sortie d'évacuation 45.

L'entrée commune 41 est décalée vers l'arrière par rapport à celle du premier mode de réalisation. L'entrée commune 41 est située à proximité de la deuxième extrémité transversale 61b du premier conduit, au lieu d'être à proximité de sa première extrémité transversale 61a. Autrement dit, l'entrée commune 41 est située à proximité de la jonction du premier conduit 60 et du deuxième conduit 80. L'entrée 41 est configurée pour diviser le flux de lubrifiant qui la traverse en un flux de transit 106 dans le deuxième conduit 80 et en un flux de refroidissement 104b.

La sortie d'évacuation 45 est décalée vers l'avant et vers le haut par rapport à celle du premier mode de réalisation. La sortie d'évacuation 45 est orientée sensiblement radialement vers l'extérieur selon la direction Y₅-Y₅, c'est-à-dire dans une direction opposée au roulement 10.

Le fonctionnement du dispositif de lubrification et de refroidissement 42 selon le deuxième mode de réalisation est décrit ci-dessous.

Un flux d'entrée 101b s'écoule dans le conduit d'entrée 51 en direction de l'entrée commune 41 de lubrifiant. Le flux de lubrifiant traversant l'entrée commune 41 se divise dès l'entrée 41 en un flux de transit 106 dans le deuxième conduit et un flux de refroidissement 104b s'écoulant dans le premier conduit 60.

L'intégralité du lubrifiant dans le deuxième conduit 80 est éjectée à travers la sortie de lubrification 43 selon un flux de lubrification 107b. L'intégralité du lubrifiant dans le premier conduit 60 est éjectée à travers la sortie d'évacuation 45 dans le conduit de sortie 57 radialement vers l'extérieur de l'assemblage 4 selon un flux d'évacuation 105b.

Le premier conduit 60 permet de refroidir efficacement le roulement 10, en limitant la quantité de lubrifiant injectée dans le roulement 10. Le deuxième conduit 80 permet de lubrifier le roulement 10. Le dispositif de lubrification et de refroidissement 40, 42 refroidit et lubrifie efficacement le roulement 10, tout en augmentant le rendement du roulement 10.

Dans le premier mode de réalisation, le lubrifiant circulant dans le deuxième conduit 80, c'est-à-dire le flux de lubrification 107a, a circulé dans le premier conduit 60. Il a donc servi à refroidir la bague extérieure 20 dans le premier conduit 60 et le flux de refroidissement 104a est plus important. Le lubrifiant injecté dans le roulement 10 présente néanmoins une température plus élevée. Le lubrifiant injecté pour la lubrification présente aussi une viscosité plus faible.

Dans le deuxième mode de réalisation, le lubrifiant circulant dans le deuxième conduit 80, c'est-à-dire le flux de transit 106, n'a pas circulé dans le premier conduit 60. Il ne s'est donc pas réchauffé par contact thermique avec la bague extérieure 20. Le lubrifiant injecté dans le roulement 10 présente une température plus faible, ce qui favorise les échanges thermiques à l'intérieur du roulement 10. Le lubrifiant présente une viscosité plus forte. Il a donc tendance à lubrifier davantage le roulement 10.

L'assemblage 4 selon le premier mode de réalisation est préféré lorsque la température du lubrifiant est faible par rapport à celle du roulement 10. L'assemblage 4 selon le deuxième mode de réalisation est préféré lorsque la température du lubrifiant entrant dans le dispositif de lubrification et de refroidissement 40, 42 est plus élevée.

Bien entendu, diverses modifications peuvent être apportées par l'homme du métier à l'invention qui vient d'être décrite sans sortir du cadre de l'exposé de l'invention.

La structure de la turbomachine 1 peut varier. Il peut s'agir également d'un turbopropulseur ou d'un turbomoteur.

De manière générale, l'axe X-X du dispositif de lubrification et de refroidissement est sensiblement parallèle avec l'axe 3 de la turbomachine. Selon une variante de réalisation, il est strictement parallèle à l'axe 3 de la turbomachine.

En variante, le dispositif de lubrification et de refroidissement 40, 42 comprend une couche de transfert thermique entre la paroi 62 du premier conduit 60 et la bague extérieure 20.

Le dispositif de lubrification et de refroidissement 40, 42 peut être fixé au support 50 directement plutôt que par la bague extérieure 20.

En variante encore, le dispositif de lubrification 40, 42 est monobloc avec le support 50.

La forme du dispositif de lubrification et de refroidissement 40, 42 peut varier. En particulier, le deuxième conduit peut être incliné d'un angle différent de 90° par rapport au premier conduit 60.

Le nombre, la répartition et l'orientation des entrées 41, des sorties de lubrification 43 et des sorties d'évacuation 45 peut varier. Le dispositif de lubrification et de refroidissement 40, 42 peut comporter davantage d'entrées que de sorties de lubrification 43.

## Revendications

1. Dispositif de lubrification et de refroidissement (40, 42) pour un roulement (10, 11, 12, 13,14, 16, 18) de turbomachine, au moins partiellement annulaire autour d'un axe (X-X) du dispositif de lubrification et de refroidissement, **caractérisé en ce que** le dispositif (40, 42) comprend :
un premier conduit (60) configuré pour être en contact thermique avec une bague extérieure (20) du roulement en entourant au moins partiellement la bague extérieure (20), le premier conduit (60) comprenant une sortie d'évacuation (45),
un deuxième conduit (80) incliné par rapport au premier conduit (60) et raccordé fluidiquement au premier conduit (60), le deuxième conduit (80) comprenant une sortie de lubrification (43),
le premier conduit (60) étant configuré pour faire circuler du lubrifiant pour refroidir la bague extérieure (20), vers la sortie d'évacuation (45) du lubrifiant configurée pour évacuer du lubrifiant hors du dispositif de lubrification et de refroidissement (40, 42) en direction (Y₄-Y₄, Y₅-Y₅) opposée du roulement (10, 11, 12, 13,14, 16, 18),
le deuxième conduit (80) étant configuré pour éjecter du lubrifiant hors du dispositif de lubrification et de refroidissement (40, 42) à travers la sortie de lubrification (43) vers le roulement (10, 11, 12, 13,14, 16, 18) pour lubrifier le roulement (10, 11, 12, 13,14, 16, 18).

2. Dispositif de lubrification et de refroidissement (40, 42) selon la revendication précédente, comprenant une entrée commune (41) de lubrifiant pour alimenter le premier conduit (60) et le deuxième conduit (80) en lubrifiant.

3. Dispositif de lubrification et de refroidissement (40, 42) selon la revendication précédente, dans lequel le premier conduit (60) est situé axialement entre la sortie de lubrification (43) et l'entrée commune (41) de lubrifiant ou bien entre la sortie de lubrification (43) et la sortie d'évacuation (45).

4. Dispositif de lubrification et de refroidissement (40, 42) selon l'une quelconque des revendications précédentes, comprenant une entrée (41) de lubrifiant qui est située à proximité d'une première extrémité transversale (61a) du premier conduit,
le premier conduit (60) comprenant la sortie d'évacuation (45) qui est située à une deuxième extrémité transversale (61b) du premier conduit qui est opposée à la première extrémité (61a).

5. Dispositif de lubrification et de refroidissement (40, 42) selon l'une quelconque des revendications précédentes, dans lequel la sortie de lubrification (43) est orientée de manière à projeter du lubrifiant sur un flanc d'un élément roulant (29), de préférence sensiblement axialement, et/ou
dans lequel la sortie d'évacuation (45) est de préférence orientée sensiblement axialement ou sensiblement radialement.

6. Dispositif de lubrification et de refroidissement (40, 42) selon l'une quelconque des revendications précédentes, dans lequel le dispositif de lubrification et de refroidissement (4) comprend une pluralité d'entrées (41) de lubrifiant, une pluralité de sorties d'évacuation (45) et/ou une pluralité de sorties de lubrification (43), qui sont espacées autour de l'axe (X-X) du dispositif de lubrification et de refroidissement,
les entrées (41) de lubrifiant, les sorties d'évacuation (45) et/ou les sorties de lubrification (43) étant de préférence réparties symétriquement autour de l'axe (X-X) du dispositif de lubrification et de refroidissement.

7. Dispositif de lubrification et de refroidissement (40, 42) selon l'une quelconque des revendications précédentes, dans lequel le premier conduit (60) est orienté sensiblement axialement, le deuxième conduit (80) étant orienté sensiblement radialement vers l'intérieur, par rapport à l'axe (X-X) du dispositif de lubrification et de refroidissement.

8. Dispositif de lubrification et de refroidissement (40, 42) selon l'une quelconque des revendications précédentes, dans lequel le dispositif de lubrification et de refroidissement (40, 42) est annulaire, le premier conduit (60) étant configuré pour être au contact thermique de la bague extérieure (20) au moins sur la majorité de la longueur circonférentielle de la bague extérieure (20),
le deuxième conduit (80) formant de préférence un rebord circonférentiel du dispositif de lubrification et de refroidissement (40, 42).

9. Dispositif de de lubrification et de refroidissement selon l'une quelconque des revendications précédentes, dans lequel une paroi interne (62) du premier conduit comprenant au moins un élément de refroidissement (64) faisant saillie dans le premier conduit (60) et configuré pour accroître les échanges thermiques entre le lubrifiant dans le premier conduit (60) et la bague extérieure (20), et/ou
dans lequel la paroi interne (62) du premier conduit et/ou une paroi interne (82) du deuxième conduit comprennent au moins un renfort (66) configuré pour augmenter la résistance mécanique du dispositif de lubrification et de refroidissement (40, 42).

10. Assemblage pour turbomachine comprenant un support fixe (50) de roulement, le roulement (10, 11, 12, 13,14, 16, 18) qui comprend une bague extérieure (20), et un dispositif de lubrification et de refroidissement (40, 42) selon l'une quelconque des revendications précédentes,
le dispositif de lubrification et de refroidissement (40, 42) entourant au moins partiellement la bague extérieure (20) et étant situé radialement entre le roulement (10, 11, 12, 13,14, 16, 18) et le support (50).

## Patentansprüche

1. Vorrichtung zum Schmieren und Kühlen (40, 42) für ein Lager (10, 11, 12, 13, 14, 16, 18) einer Turbomaschine, das zumindest teilweise ringförmig um eine Achse (X-X) der Vorrichtung zum Schmieren und Kühlen verläuft, **dadurch gekennzeichnet, dass** die Vorrichtung (40, 42) Folgendes umfasst:
einen ersten Kanal (60), der dazu ausgelegt ist, dass er mit einem Außenring (20) des Lagers in Wärmekontakt steht, indem er den Außenring (20) zumindest teilweise umgibt, wobei der erste Kanal (60) einen Ablaufauslass (45) aufweist,
einen zweiten Kanal (80), der bezüglich des ersten Kanals (60) geneigt und mit dem ersten Kanal (60) fluidverbunden ist, wobei der zweite Kanal (80) einen Schmierauslass (43) aufweist,
wobei der erste Kanal (60) dazu ausgelegt ist, Schmiermittel zum Kühlen des Außenrings (20) in Richtung des Ablaufauslasses (45) des Schmiermittels zirkulieren zu lassen, der zum Abziehen des Schmiermittels nach außerhalb der Vorrichtung zum Schmieren und Kühlen (40, 42) in eine zu dem Lager (10, 11, 12, 13, 14, 16, 18) entgegengesetzte Richtung (Y₄-Y₄, Y₅-Y₅) ausgelegt ist,
wobei der zweite Kanal (80) dazu ausgelegt ist, Schmiermittel nach außerhalb der Vorrichtung zum Schmieren und Kühlen (40, 42) durch den Schmierauslass (43) in Richtung des Lagers (10, 11, 12, 13, 14, 16, 18) auszustoßen, um das Lager (10, 11, 12, 13, 14, 16, 18) zu schmieren.

2. Vorrichtung zum Schmieren und Kühlen (40, 42) nach dem vorhergehenden Anspruch, mit einem gemeinsamen Schmiermitteleinlass (41), um dem ersten Kanal (60) und dem zweiten Kanal (80) Schmiermittel zuzuführen.

3. Vorrichtung zum Schmieren und Kühlen (40, 42) nach dem vorhergehenden Anspruch, wobei sich der erste Kanal (60) axial zwischen dem Schmierauslass (43) und dem gemeinsamen Schmiermitteleinlass (41) oder auch zwischen dem Schmierauslass (43) und dem Ablaufauslass (45) befindet.

4. Vorrichtung zum Schmieren und Kühlen (40, 42) nach einem der vorhergehenden Ansprüche, mit einem Schmiermitteleinlass (41), der sich in der Nähe eines ersten quer verlaufenden Endes (61a) des ersten Kanals befindet,
wobei der erste Kanal (60) den Ablaufauslass (45) aufweist, der sich an einem zweiten quer verlaufenden Ende (61b) des ersten Kanals befindet, das dem ersten Ende (61a) gegenüberliegt.

5. Vorrichtung zum Schmieren und Kühlen (40, 42) nach einem der vorhergehenden Ansprüche, wobei der Schmierauslass (43) derart ausgerichtet ist, dass er das Schmiermittel im Wesentlichen axial auf eine Seitenfläche eines Rollelements (29) vorzugsweise spritzt, und/oder
wobei der Ablaufauslass (45) vorzugsweise im Wesentlichen axial oder im Wesentlichen radial ausgerichtet ist.

6. Vorrichtung zum Schmieren und Kühlen (40, 42) nach einem der vorhergehenden Ansprüche, wobei die Vorrichtung zum Schmieren und Kühlen (4) eine Mehrzahl von Schmiermitteleinlässen (41), eine Mehrzahl von Ablaufauslässen (45) und/oder eine Mehrzahl von Schmierauslässen (43) aufweist, welche um die Achse (X-X) der Vorrichtung zum Schmieren und Kühlen herum beabstandet sind,
wobei die Schmiermitteleinlässe (41), die Ablaufauslässe (45) und/oder die Schmierauslässe (43) vorzugsweise symmetrisch um die Achse (X-X) der Vorrichtung zum Schmieren und Kühlen verteilt sind.

7. Vorrichtung zum Schmieren und Kühlen (40, 42) nach einem der vorhergehenden Ansprüche, wobei der erste Kanal (60) im Wesentlichen axial ausgerichtet ist, wobei der zweite Kanal (80) bezüglich der Achse (X-X) der Vorrichtung zum Schmieren und Kühlen im Wesentlichen radial nach innen ausgerichtet ist.

8. Vorrichtung zum Schmieren und Kühlen (40, 42) nach einem der vorhergehenden Ansprüche, wobei die Vorrichtung zum Schmieren und Kühlen (40, 42) ringförmig ist, wobei der erste Kanal (60) so ausgelegt ist, dass er mit dem Außenring (20) zumindest über den größten Teil der Umfangslänge des Außenrings (20) in Wärmekontakt steht,
wobei der zweite Kanal (80) vorzugsweise einen Umfangsrand der Vorrichtung zum Schmieren und Kühlen (40, 42) bildet.

9. Vorrichtung zum Schmieren und Kühlen nach einem der vorhergehenden Ansprüche, wobei eine Innenwand (62) des ersten Kanals mindestens ein Kühlelement (64) aufweist, welches in den ersten Kanal (60) vorsteht und dazu ausgelegt ist, den Wärmeaustausch zwischen dem Schmiermittel in dem ersten Kanal (60) und dem Außenring (20) zu vergrößern, und/oder
wobei die Innenwand (62) des ersten Kanals und/oder eine Innenwand (82) des zweiten Kanals mindestens eine Verstärkung (66) zur Erhöhung des mechanischen Widerstands der Vorrichtung zum Schmieren und Kühlen (40, 42) aufweisen.

10. Anordnung für eine Turbomaschine, die eine feste Lagerabstützung (50), das Lager (10, 11, 12, 13, 14, 16, 18), das einen Außenring (20) aufweist, sowie eine Vorrichtung zum Schmieren und Kühlen (40, 42) nach einem der vorhergehenden Ansprüche umfasst,
wobei die Vorrichtung zum Schmieren und Kühlen (40, 42) zumindest teilweise den Außenring (20) umgibt und sich radial zwischen dem Lager (10, 11, 12, 13, 14, 16, 18) und der Abstützung (50) befindet.

## Claims

1. A lubricating and cooling device (40, 42) for a bearing (10, 11, 12, 13,14, 16, 18) of a turbomachine, wherein the lubricating and cooling device (40, 42) is at least partially annular about an axis (X-X) of the lubricating and cooling device, **characterised in that** the lubricating and cooling device (40, 42) comprises:
a first duct (60) which is configured to be in thermal contact with an outer ring (20) of the bearing by at least partially surrounding the outer ring (20), wherein the first duct (60) comprises a discharge outlet (45),
a second duct (80) which is tilted with respect to the first duct (60) and which is fluidly connected to the first duct (60), wherein the second duct (80) comprises a lubricating outlet (43),
wherein the first duct (60) is configured to circulate lubricant to the discharge outlet (45) of the lubricant to cool the outer ring (20), wherein the discharge outlet (45) is configured to discharge lubricant out of the lubricating and cooling device (40, 42) in an opposite direction (Y₄-Y₄, Y₅-Y₅) to the direction towards the bearing (10, 11, 12, 13, 14, 16, 18), wherein the second duct (80) is configured to eject lubricant out of the lubricating and cooling device (40, 42) through the lubricating outlet (43) to the bearing (10, 11, 12, 13,14, 16, 18) in order to lubricate the bearing (10, 11, 12, 13,14, 16, 18).

2. The lubricating and cooling device (40, 42) according to the preceding claim, wherein the lubricating and cooling device (40, 42) comprises a common lubricant inlet (41) to supply both the first duct (60) and the second duct (80) with lubricant.

3. The lubricating and cooling device (40, 42) according to the preceding claim, wherein the first duct (60) is axially located between the lubricating outlet (43) and the common lubricant inlet (41) or wherein the first duct (60) is axially located between the lubricating outlet (43) and the discharge outlet (45).

4. The lubricating and cooling device (40, 42) according to any of the preceding claims, wherein the lubricating and cooling device (40, 42) comprises a lubricant inlet (41) which is located near a first transverse end (61a) of the first duct,
wherein the first duct (60) comprises the discharge outlet (45), wherein the discharge outlet (45) is located at a second transverse end (61b) of the first duct which is opposite to the first end (61a) of the first duct.

5. The lubricating and cooling device (40, 42) according to any of the preceding claims, wherein the lubricating outlet (43) is oriented so as to spray lubricant onto a flank of a rolling element (29), preferably substantially axially, and/or
wherein the discharge outlet (45) is preferably oriented substantially axially or substantially radially.

6. The lubricating and cooling device (40, 42) according to any of the preceding claims, wherein the lubricating and cooling device (4) comprises a plurality of lubricant inlets (41), a plurality of discharge outlets (45) and/or a plurality of lubricating outlets (43), wherein the plurality of lubricant inlets (41), discharge outlets (45) and/or a of lubricating outlets (43) are spaced about the axis (X-X) of the lubricating and cooling device,
wherein the lubricant inlets (41), the discharge outlets (45) and/or the lubricating outlets (43) are preferably symmetrically distributed about the axis (X-X) of the lubricating and cooling device.

7. The lubricating and cooling device (40, 42) according to any of the preceding claims, wherein the first duct (60) is oriented substantially axially with respect to the axis (X-X) of the lubricating and cooling device, wherein the second duct (80) is oriented substantially radially inwardly with respect to the axis (X-X) of the lubricating and cooling device.

8. The lubricating and cooling device (40, 42) according to any of the preceding claims, wherein the lubricating and cooling device (40, 42) is annular, wherein the first duct (60) is configured to be in thermal contact with the outer ring (20) over at least most of the circumferential length of the outer ring (20),
wherein the second duct (80) preferably form a circumferential rim of the lubricating and cooling device (40, 42).

9. The lubricating and cooling device according to any of the preceding claims, wherein an inner wall (62) of the first duct comprises at least one cooling element (64) which is projecting into the first duct (60) and which is configured to increase heat exchanges between the lubricant in the first duct (60) and the outer ring (20), and/or
wherein the inner wall (62) of the first duct and/or an inner wall (82) of the second duct comprise at least one reinforcement (66) which is configured to increase the mechanical strength of the lubricating and cooling device (40, 42).

10. A turbomachine assembly comprising a fixed support (50) for a bearing, the bearing (10, 11, 12, 13,14, 16, 18) which comprises an outer ring (20), and a lubricating and cooling device (40, 42) according to any of the preceding claims,
wherein the lubricating and cooling device (40, 42) at least partially surrounds the outer ring (20) and wherein the lubricating and cooling device (40, 42) is radially located between the bearing (10, 11, 12, 13, 14, 16, 18) and the support (50).
